# EUROPÄISCHE PATENTSCHRIFT

(11) **EP 0 852 875 B1**
(45) Veröffentlichungstag und Bekanntmachung des Hinweises auf die Patenterteilung: **27.02.2002**
(21) Anmeldenummer: 96938000.5
(22) Anmeldetag: 06.09.1996
(51) Int. Cl.: H04M 3/50, H04M 3/36, H04M 3/48

(54) **VERFAHREN ZUR BEHANDLUNG VON AN KOMMUNIKATIONSSYSTEMEN MIT AUTOMATISCHER ANRUFVERTEILUNG ANKOMMENDEN ANRUFEN BEI BESETZTEN AGENTEN-KOMMUNIKATIONSENDGERÄTEN**
METHOD OF HANDLING INCOMING CALLS TO COMMUNICATION SYSTEMS WITH AUTOMATIC CALL DISTRIBUTION FOR BUSY AGENT-COMMUNICATION TERMINALS
PROCEDE DE TRAITEMENT D'APPELS PARVENANT A DES SYSTEMES DE TELECOMMUNICATIONS A REPARTITION AUTOMATIQUE DES APPELS POUR DES TERMINAUX-AGENTS OCCUPES

(30) Priorität: 25.09.1995 DE 19535540
(43) Veröffentlichungstag der Anmeldung: 15.07.1998
(73) Patentinhaber: SIEMENS AKTIENGESELLSCHAFT, 80333 München (DE)
(72) Erfinder: DROBEK, Erich, D-82008 Unterhaching (DE)
(86) Internationale Anmeldenummer: DE9601679
(87) Internationale Veröffentlichungsnummer: WO9712468

(56) Entgegenhaltungen:
- EP-A- 0 539 105
- US-A- 4 896 345
- US-A- 5 185 786
- US-A- 5 299 260
- HET PTT BEDRIJF DENKBEELDEN METHODEN ONDERZOEKINGEN, Bd. 24, Nr. 1-4, 1.Dezember 1986, Seiten 30-35, XP000563400 NOORDEGRAAF C: "HERHAALDE OPROEPEN; EEN STUDIE NAAR ABONNEEGEDRAG"
- AT & T TECHNICAL JOURNAL, Bd. 70, Nr. 5, 1.September 1991, Seiten 36-44, XP000244602 HARVEY D E ET AL: "CALL CENTER SOLUTIONS"

## Beschreibung

Für eine komfortable Vermittlung von an Kommunikationssystemen eines Kommunikationsnetzes ankommenden Anrufen an vorgegebene Gruppen von Agenten-Kommunikationsendgeräten sind diese mit einer Funktion automatische Anrufverteilung ausgestattet. Die automatische Anrufverteilung - in der Fachwelt auch als ACD bekannt - ist im wesentlichen durch eine an die jeweiligen Kommunikationssysteme angeschlossene Datenverarbeitungsanlage, wie z.B. einen ACD-Server realisiert. Für den Kommunikationsaustausch zwischen dem Kommunikationssystem und dem ACD-Server ist in beiden Einrichtungen eine ACL-Schnittstelle (Application Connectivity Link) vorgesehen. Als Übertragungsprozedur ist beispielsweise die MSV1-Prozedur oder eine anderes Übertragungsprotokoll verwendbar. Im Kommunikationssystem ist eine Programmstruktur implementiert, mit deren Hilfe sowohl die vermittlungstechnischen Ereignisse insbesondere der ankommenden Anrufe durch Ereignismeldungen an den ACD-Server gemeldet als auch vom ACD-Server über die ACL-Schnittstelle übermittelte vermittlungstechnische Anweisungen zur Ausführung gebracht werden. Bezogen auf eine automatische Anrufverteilung sind dies insbesondere die Umkopplung ankommender Anrufe auf durch die automatische Anrufverteilung ermittelte Agenten-Kommunikationsendgeräte.

Bei einer automatische Anrufverteilung sind einer Servicenummer eine Gruppe von Agenten-Kommunikationsendgeräten zugeordnet, beispielsweise sind einer Rufnummer einer Firma mehrere Rufannahme-Kommunikationsendgeräte zugeordnet - beispielsweise mehrere Rufannahmeplätze. Hierbei repräsentiert die Servicenummer einen Service-Kommunikationsanschluß - stellt einen üblichen Kommunikationsendgeräteanschluß dar -, an den ein Service-Kommunikationsendgerät angeschlossen ist. Für dieses Service-Kommunikationsendgerät ist eine Anrufumleitung zu einem Sammelanschluß eingerichtet, dem die Agenten-Kommunikationsendgeräte zugeordnet sind, die die gewünschte Gruppe bilden sollen. Ein ankommender Anruf mit einer Servicenummer wird durch die eingestellte Anrufumleitung auf den Sammelanschluß vermittelt und dort gehalten. Gleichzeitig wird durch entsprechende Ereignismeldungen an den ACD-Server das Ankommen eines Rufes für diese Servicenummer gemeldet. Mit Hilfe der im ACD-Server implementierten automatischen Anrufverteilung wird ein freies Agenten-Kommunikationsendgerät der Gruppe ermittelt bzw. bestimmt und der ankommende Anruf an das bestimmte Agenten-Kommunikationsendgerät vermittelt bzw. umgekoppelt. Die Umkopplung wird durch eine vom ACD-Server zum Kommunikationssystem übermittelte, vermittlungstechnische Anweisung veranlaßt. Durch die automatische Anrufverteilung können ankommende Anrufe in einer Warteschlange gehalten, in der Haltezeit Musikeinspielungen oder Ansagen eingeblendet und bei vollständig belegten Agenten-Kommunikationsendgeräten diese an Aufzeichnungs- und Antworteinrichtung weitergeleitet oder abgewiesen werden.

Für die automatische Anrufverteilungs-Funktion ist im privaten Kommunikationssystem ein Sammelanschluß mit einem reellen Teilnehmer konfiguriert, der durch ein an einen Service-Kommunikationsanschluß angeschlossenes Service-Kommunikationsendgerät repräsentiert ist. Für diesen Sammelanschluß ist ein Anrufordner zum Sammeln und Überwachen der ankommenden Anrufe erforderlich. Für diese Funktionen sind im privaten Kommunikationssystem die Überwachungsfunktion "Sammelanschluß-Zustandsüberwachung" vorgesehen und darüber hinaus ist eine Vermittlungsfunktion implementiert, mit deren Hilfe das Umkoppeln von ankommenden Rufen zu dem freien Agenten-Kommunikationsendgerät im Rufzustand möglich ist. Bei einer alternativen Ausgestaltung eines Kommunikationssystems werden die ankommenden Anrufe direkt auf einen Sammelanschluß mit einem Anrufordner gesteuert, wobei die Servicenummer einen virtuelles Service-Kommunikationsendgerät bzw. einen virtuellen Service-Kommunikationsanschluß repräsentiert.

Bei derartigen Kommunikationssystemen mit automatischer Anrufverteilung werden im Anrufordner - beispielsweise auf einer Anrufverteilergruppe realisiert - ankommende Anrufe abgewiesen, wenn alle für die automatische Anrufverteilung vorgesehenen Kommunikationsendgeräte bzw. alle Bearbeitertelefone besetzt sein und darüber hinaus auch alle zusätzlichen Speicherplätze des Anrufordners bereits von wartenden Anrufen belegt sind.

In EP 0 539 105 A ist ein Verfahren zur Behandlung von an einem in einem Kommunikationsnetz vorgesehenen Kommunikationssystem mit automatischer Anrufverteilung ankommenden Anrufen beschrieben. Dabei sind die Anrufe von Kommunikationsendgeräten des Kommunikationsnetzes initialisiert. Die ankommenden Anrufe im Kommunikationssystem werden mit Hilfe eines Anrufordners erfaßt, gehalten und anschließend an den nächsten verfügbaren Agenten vermittelt. Falls kein Agent verfügbar ist, wird die Rufnummer des rufenden Teilnehmers in eine Warteschlange eingetragen. Wenn der Agent verfügbar ist, wird ein Rückruf nach dem FIFO-Prinzip eingeleitet.

In US 5 299 260 ist ein Verfahren zur automatischen Anrufverteilung beschrieben, bei dem ankommende Anrufe identifiziert und registriert werden. Zur Anrufverteilung wird aufgrund einer Vielzahl von Auswahlkriterien, die sich auf das Kaufverhalten eines anrufenden Kunden beziehen, eine Auswahl unter verschiedenen Kunden getroffen oder eine Rangfolge von verschiedenen Kunden aufgestellt. Als Auswahlkriterien werden die Wartezeit als Gradmesser der Kundenverfügbarkeit, der Sachwert der bereits getätigten Käufe, die Bedeutung des Kunden oder die Zahl der Anrufe pro Zeiteinheit herangezogen. Dabei ist die Wertigkeit und damit die Priorität der Auswahlkriterien änderbar.

Die der Erfindung zugrundeliegende Aufgabe besteht darin, die Behandlung der abgewiesenen, an einem Kommunikationssystem mit automatischer Anrufverteilung ankommenden Anrufe zu verbessern. Die Aufgabe wird durch die Merkmale des Anspruchs 1 gelöst.

Der wesentliche Aspekt des erfindungsgemäßen Verfahrens ist darin zu sehen, daß die das rufende Kommunikationsendgerät identifizierende Identifikationen von abgewiesenen, ankommenden Anrufen erfaßt sowie in eine Verlustliste eingetragen werden. Ist die jeweilige Identifikation bereits in die Verlustliste eingetragen, wird der ankommende Ruf in einem der Identifikation zugeordneten Zähler vermerkt. Zusätzlich zu dem Zählen der ankommenden, abgewiesenen Anrufe kann die Zeitdauer zwischen zwei Anrufversuchen bzw. mehreren Anrufversuchen festgestellt werden - Anspruch 2. Daraufhin sind erfindungsgemäß unterschiedliche bevorzugte Anrufbehandlungen einleitbar.

Eine bevorzugte Anrufbehandlung ist darin zu sehen, daß in Abhängigkeit von der Anzahl und der Häufigkeit von in die Verlustliste eingetragenen Identifikationen ein erneut ankommender Anruf an ein spezielles, für die Bearbeitung von in die Verlustliste VL eingetragenen Anrufen vorgesehenen Agenten-Kommunikationsendgerät AKE eingeleitet wird - Anspruch 3. Dieses spezielle Agenten-Kommunikationsendgerät bzw. dieses Bearbeitertelefon ist hierbei speziell für die Bearbeitung von z.B. zwei oder mehrfach abgewiesenen, ankommenden Anrufe eingerichtet.

Eine weitere bevorzugte Anrufbehandlung kann darin bestehen, daß in Abhängigkeit von der Anzahl und der Häufigkeit von in der Verlustliste eingetragenen Identifikationen nach Freiwerden eines besetzten Agenten-Kommunikationsendgerätes von diesem eine Verbindung zu dem durch die jeweilige Identifikation bestimmten Kommunikationsendgerät aufgebaut wird -Anspruch 4. Eine weitere bevorzugte Anrufbehandlung besteht darin, daß in Abhängigkeit von der Anzahl und der Häufigkeit von in die Verlustliste eingetragenen Identifikationen zumindest ein weiteres Agenten-Kommunikationsendgerät bzw. ein weiteres Bearbeitertelefon aktiviert wird. Eine Aktivierung kann beispielsweise durch eine weitere Bearbeitungsperson erfolgen - Anspruch 5.

Die Identifikationen werden vorteilhaft in digitalen Kommunikationsnetzen oder analogen Kommunikationsnetzen mit digitalen Kommunikationssystemen durch die Rufnummer des rufenden Kommunikationsendgerätes - Anspruch 6 - und in analogen Kommunikationsnetzen durch eine Nachwahl-Rufnummer - Anspruch 7 - repräsentiert.

Für eine nachträgliche Statistik bzw. Auswertung der Verlustlisten einschließlich der Zähler und der aufgezeichneten Zeitdauern ist eine Protokollierung für diese Informationen und eine Visualisierung an einer Bildschirmeinrichtung besonders vorteilhaft - Anspruch 8. Durch diese Protokollierung und Visualisierung ist eine Dimensionierung hinsichtlich der Anzahl der Agenten-Kommunikationsendgeräte in den jeweiligen Tageszeiten erheblich einfacher möglich.

Im folgenden wird das erfindungsgemäße Verfahren anhand eines Blockschaltbildes und eines Ablaufdiagrammes näher erläutert. Dabei zeigen:
- FIG 1: ein Blockschaltbild eines Kommunikationssystems mit automatischer Anrufverteilung mit einer Datenverarbeitungsanlage und
- FIG 2: ein Ablaufdiagramm des erfindungsgemäßen Verfahrens.

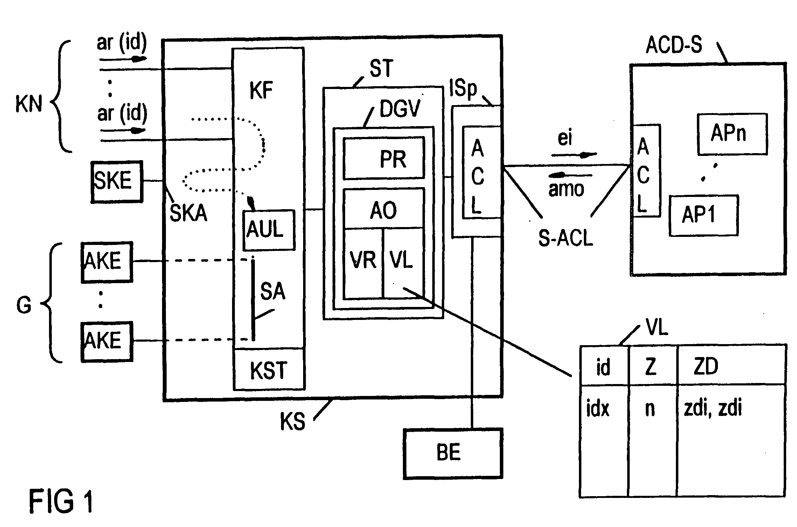

FIG 1 zeigt ein Kommunikationssystem KS, beispielsweise das private Kommunikationssystem HICOM 300 der Firma Siemens, das mit der Funktion "Automatische Anrufverteilung" ausgestattet ist. Für die Realisierung dieser automatischen Anrufverteilung - in der Fachwelt als ACD = Automatic Call Distribution bekannt, ist das private Kommunikationssystem KS über eine ACL-Schnittstelle S-ACL (Application Connectivity Link) mit einem ACD-Server ACD-S verbunden. Sowohl im ACD-Server ACD-S als auch im Kommunikationssystem KS ist jeweils eine ACL-Programmstruktur ACL vorgesehen, durch die die prozeduralen und physikalischen Eigenschaften der ACL-Schnittstelle S-ACL - physikalisch insbesondere ein V.24-Schnittstelle - realisiert sind. Im Kommunikationssystem KS ist die ACL-Programmstruktur ACL mit einer Serversteuerung DGV verbunden, mit deren Hilfe ein zwischen dem ACD-Server ACD-S und dem Kommunikationssystem KS eingesetztes ACL-Protokoll (Applications Connectivety Link Protocol) bzw. prozedurale ACL-Schnittstelle realisiert ist. Mit Hilfe dieses meldungsquittungsorientierten Protokolls werden am Kommunikationssystem KS ankommende Anrufe ar entsprechend den im ACD-Server ACD-S implementierten Applikationen - in FIG 1 durch Rechtecke mit der Bezeichnung AP1 bis APn angedeutet - durch Übermitteln definierter Meldungen an das Kommunikationssystem KS gesteuert. Des weiteren werden mit Hilfe von Meldungen dieses Protokolls die ankommenden Anrufen ar einschließlich der übermittelten Identifikationen id im Sinne einer Bewertung bzw. Auswertung an den ACD-Server ACD-S übermittelt. Die Serversteuerung DGV sowie die ACL-Programmstruktur ACL sind im Kommunikationssystem KS beispielsweise in einem integrierten Betriebstechnik-Server ISp angeordnet.

Die Serversteuerung DGV weist zusätzlich einen Anschluß an ein mit einer Steuerung KST ausgestattetes Koppelfeld KF des privaten Kommunikationssystems KS auf. Über diesen Anschluß werden die ankommenden Anrufe ar hinsichtlich einer weiteren Verbindungssteuerung beeinflußt. Des weiteren weist die Sterversteuerung DGV eine vermittlungstechnische "Monitoring"-Funktion auf, durch alle vermittlungstechnische Ereignisse im Kommunikationssystem KS erfaßt und durch gebildete Ereignismeldungen ei über die ACL-Schnittstelle ACL an den ACD-Server ACD-S gemeldet. Mit Hilfe dieser Ereingnismeldungen ei wird im ACD-Server ACD-S die Funktion "automatische Anrufverteilung" realisiert. Umgekehrt werden im ACD-Server ACD-S gebildete vermittlungstechnische Anweisungen amo an die Serversteuerung DVG übermittelt und durch diese wird die jeweilige vermittlungstechnische Einstellung veranlaßt, beispielsweise die vermittlungstechnische Umkopplung eines ankommenden Anrufes ar zu einem freien, durch die automatische Anrufverteilung ermittelten Agenten-Kommunikationsendgerät AKE.

Für eine automatische Anrufverteilung vorgesehene Agenten-Kommunikationsendgeräte AKE sind im wesentlichen direkt, d.h. intern an das Kommunikationssystem KS angeschlossen und stellen die Agenten einer Gruppe G mit automatischer Anrufverteilung dar. Die ankommenden Anrufe ar kommen von einem Kommunikationsnetz KN - beispielsweise dem öffentlichen ISDN-Kommunikationsnetz oder dem öffentlichen Fernsprechnetz, jedoch auch von internen, nicht als Agenten-Kommunikationsendgeräte AKE kontigurierte Kommunikationsendgeräten.

Für die Funktion "automatische Anrufverteilung" ist im Kommunikationssystem KS ein Sammelanschluß SA mit einem reellen Teilnehmer eingerichtet; in der Praxis wird hierzu an einen Service-Kommunikationsanschluß SKA ein Service-Kommunikationsendgerät SKE angeschlossen. Durch eine für das Service-Kommunikationsendgerät SKE eingestellte Anrufumleitung AUL - durch ein Rechteck mit der Bezeichnung AUL angedeutet - werden ankommende Anrufe ar mit der den Service-Kommunikationsanschluß SKA adressierenden Servicenummer an den Sammelanschluß SA umgeleitet. Für diesen Sammelanschluß SA ist in der Serversteuerung DGV eine Funktion "Anrufordner" realisiert, mit deren Hilfe ankommende Anrufe ar durch eine vom ACD-Server ACD-S veranlaßte Funktion "Umkoppeln" im Rufzustand auf das durch automatische Anrufverteilung ermittelte Agenten-Kommunikationsendgerät AKE, in der Praxis ein internes Kommunikationsendgerät BKE, umgekoppelt wird.

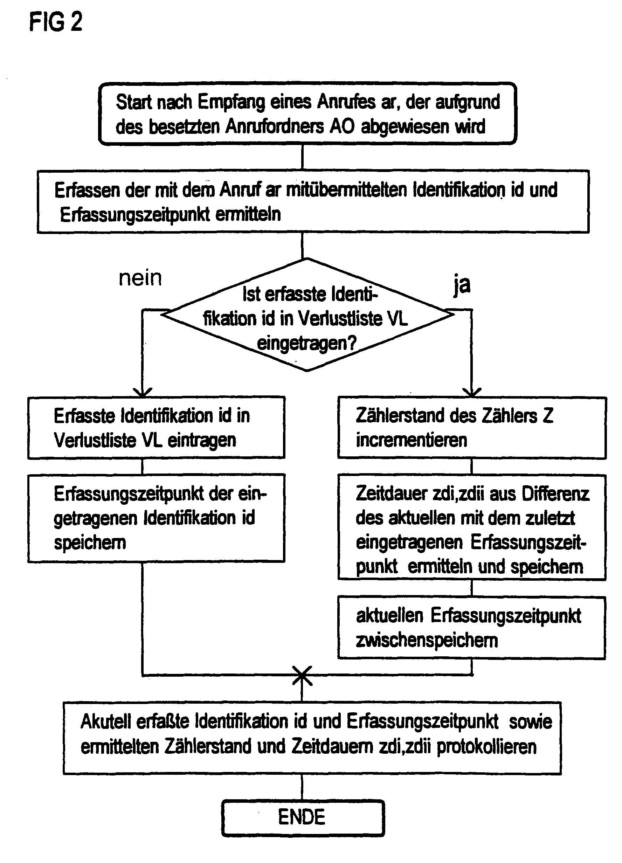

Des weiteren werden durch den Anrufordner AO in der Serversteuerung DGV alle ankommenden Rufe ar von externen Kommunikationsendgeräten KE erfaßt und bis zu einer Weiterbehandlung gehalten oder bei besetzten Agenten-Kommunikationsendgeräten AKE entsprechend der Anzahl der vorhandenen Speicherplätze in eine Warteschlange eingereiht. Zusätzliche ankommende Anrufe ar werden bei besetzten Speicherplätzen des Anrufordners AO, d.h. bei maximaler Warteschlange, abgewiesen, wobei die jeweiligen ankommenden Anrufe ar durch eine geeignete Signalisierung dem rufenden Kommunikationsendgerät als besetzt angezeigt werden. Die Behandlung derartiger abgewiesener, ankommender Anrufe ar wird in FIG 2 anhand eines sich selbst erläuternden Ablaufdiagrammes gezeigt. Die hierzu vorgesehene Verlustliste VL ist hierbei im Anrufordner (AO) realisiert - siehe FIG 1. In diese Verlustliste VL werden mit Hilfe einer programmtechnisch realisierten Verlustroutine VR für abgewiesene, ankommende Anrufe ar jeweils eine Identifikation id - üblicherweise die Rufnummer des rufenden Kommunikationsendgerätes -, bei mehreren Abweisungen die Anzahl der Abweisungen n in einem Zähler Z und zusätzlich die Zeitdauern zdi..zdii, die zwischen den Abweisungen gemessen werden, in ein Zeitdauernfeld ZD eingetragen.

Annähernd gleichzeitig zur in FIG 2 dargestellten Behandlung eines ankommenden Rufes ar bei besetztem Anrufordner AO ist mit Hilfe einer Protokollroutine PR eine Protokollierung der erfaßten Identifikation id sowie der ermittelten Zählerstände (n) und Zeitdauern (zdi) möglich. Durch dieses Protokollieren und spätere Visualisieren an einer an den integrierten Betriebstechnik-Server ISp angeschossenen Bildschirmeinrichtung BE ist eine optimale Dimensionierung von Bearbeitertelefonen bzw. von Agenten-Kommunikationsendgeräten AKE möglich.

Die Realisierung der Verlustliste VL und der Verlust:routine VR ist aufgrund der übermittelten Ereignismeldungen ei, die auch den vermittlungstechnischen Zustand des Anrufordners AO anzeigen, alternativ im ACD-Server ACD-S möglich. Bei dieser Variante nimmt zwar der im wesentlichen durch die ACL-Programmstruktur abgewickelte Meldungsverkehr zu, die im ACD-Server ACD-S durchgeführte Bewertung und Bearbeitung der Verlustliste VL entlastet jedoch die zentrale Steuerung ST.

Die in FIG 1 dargestellte Serversteuerung DGV steuert, wie vorhergehend erläutert, das Leistungsmerkmal "Automatische Anrufverteilung" und darüber hinaus im Zusammenwirken mit dem ACD-Server ACD-S - sind zusätzlich in diesem zu realisieren - zusätzliche Leistungsmerkmale, wie beispielsweise Telefondatendienst oder feste und variable Anrufumleitung für alle internen Kommunikationsendgeräte AKE.

## Patentansprüche

1. Verfahren zur Behandlung von an einem in einem Kommunikationsnetz (KN) vorgesehenen Kommunikationssystem (KS) mit auto-matischer Anrufverteilung ankommenden Anrufen (ar), die von Kommunikationsendgeräten des Kommunikationsnetzes (KN) initialisiert sind, wobei die ankommenden Anrufe (ar) im Kommunikationssystem (KS) mit Hilfe eines Anrufordners (AO) erfaßt sowie gehalten und an an das Kommunikationssystem (KS) angeschlossene, in die automatische Anrufverteilung einbezogene sowie freie Agenten-Kommunikationsendgeräte (AKE) vermittelt werden, **dadurch gekennzeichnet,**
- **daß** bei ankommenden Anrufen (ar), die aufgrund eines besetzten Anrufordners (AO) abgewiesen werden,
- entweder eine mit dem ankommenden Anruf (ar) übermittelte, das rufende Kommunikationsendgerät KE identifizierende Identifikation (id) erfaßt sowie in eine Verlustliste (VL) eingetragen wird,
- oder, sofern die jeweilige Identifikation (id) bereits eingetragen ist, der ankommende Anruf (ar) in einem der jeweiligen Identifikation (id) zugeordneten Zähler (Z) vermerkt wird,
- und **daß** für die in die Verlustliste (VL) eingetragenen Anrufe (ar) in Abhängigkeit von der Anzahl der gezählten Identifikationen eine bevorzugte Anrufbehandlung eingeleitet wird.

2. Verfahren nach Anspruch 1, **dadurch gekennzeichnet, daß** bei ankommenden, abgewiesenen Anrufen (ar) mit gleicher Identifikation (id) zusätzlich die Zeitdauer (zdi) zwischen zwei Anrufversuchen festgestellt und zu der jeweiligen Identifikation (id) in der Verlustliste (VL) eingetragen wird.

3. Verfahren nach Anspruch 1 oder 2, **dadurch gekennzeichnet, daß** in Abhängigkeit von der Anzahl und der Häufigkeit von in die Verlustliste (VL) eingetragenen Identifikationen (id) ein erneut ankommender Anruf (ar) an ein spezielles, für die Behandlung von in die Verlustliste (VL) eingetragenen Anrufen (ar) vorgesehenen Agenten-Kommunikationsendgerät (AKE) geleitet wird.

4. Verfahren nach Anspruch 1 oder 2, **dadurch gekennzeichnet, daß** in Abhängigkeit von der Anzahl und der Häufigkeit von in die Verlustliste (VL) eingetragenen Identifikationen (id) nach Freiwerden eines besetzten Agenten-Kommunikationsendgerätes (AKE) von diesem eine Verbindung zu dem durch die jeweilige Identifikation (id) bestimmten Agenten-Kommunikationsendgerät (AKE) aufgebaut wird.

5. Verfahren nach einem der Ansprüche 1 oder 2, **dadurch gekennzeichnet, daß** in Abhängigkeit von der Anzahl und der Häufigkeit von in die Verlustliste (VL) eingetragenen Identifikationen (id) weitere Agenten-Kommunikationsendgeräte (AKE) aktiviert werden.

6. Verfahren nach einem der vorhergehenden Ansprüche, **dadurch gekennzeichnet, daß** die Identifikation (id) in digitalen Kommunikationsnetzen (ISDN) durch die Rufnummer des rufenden Kommunikationsendgerätes repräsentiert ist.

7. Verfahren nach einem der vorhergehenden Ansprüche, **dadurch gekennzeichnet, daß** die Identifikation (id) in analogen Kommunikationsnetzen (FE) durch eine Nachwahl-Rufnummer repräsentiert ist.

8. Verfahren nach einem der vorhergehenden Ansprüche, **dadurch gekennzeichnet, daß** die Verlustliste (VL) einschließlich der Zählerstände (n) und der zugeordneten Zeitdauern (zdi) protokolliert wird und an einer Bildschirmeinrichtung (BE) visualisierbar ist.

9. Verfahren nach einem der vorhergehenden Ansprüche, **dadurch gekennzeichnet, daß** die im Anrufordner (AO) erfaßten ankommenden Anrufe (ar) einschließlich der Identifikationen (id) im Kommunikationssystem (KS) mit Hilfe einer ACD-Steuerprogrammstruktur (DGV) durch über eine definierte Schnittstelle V(ACL) an einen angeschlossenen ACD-Server ACD-S übermittelte Ereignismeldungen (ei) gemeldet werden, daß im ACD-Server ACD-S mit Hilfe von einer die automatische Anrufverteilung realisierenden ACD-Programmstruktur ACD vermittlungstechnische Informationen (amo) gebildet und über die definierte Schnittstelle (ACL) zu der im Kommunikationssystem (KS) realisierten ACD-Steuerprogrammstruktur (DGV) übermittelt werden, mit deren Hilfe die ankommenden Anrufe (ar) gemäß den übermittelten, vermittlungstechnischen Anweisungen (amo) vermittlungstechnisch gesteuert werden.

## Claims

1. Method for handling incoming calls (ar) to a communications system (KS) which is provided in a communications network (KN) and has automatic call distribution, which calls are initialized by communications terminals of the communications network (KN), the incoming calls (ar) being accepted and held in the communications system (KS) with the aid of a call regulator (AO) and agent communications terminals (AKE) being switched which are connected to the communications system (KS), are included in the automatic call distribution and are free, **characterized**
- **in that**, in the case of incoming calls (ar) which are refused because of a busy call regulator (AO),
- either an identification item (id) which is transmitted with the incoming call (ar) and identifies the calling communications terminal (KE) is detected and entered in a lost-call list (VL),
- or, if the respective identification item (id) has already been entered, the incoming call (ar) is noted in a counter (Z) which is assigned to the respective identification item (id),
- and **in that** a preferred call handling method is initiated for the calls (ar) which are entered in the lost-call list (VL), depending on the number of identification items counted.

2. Method according to Claim 1, **characterized in that**, in the case of incoming, refused calls (ar) having the same identification item (id), the time duration (zdi) between two call attempts is additionally found and is entered in the lost-call list (VL) for the respective identification item (id).

3. Method according to Claim 1 or 2, **characterized in that** a repeated incoming call (ar) is passed to a special agent communications terminal (AKE), which is provided for handling calls (ar) entered in the lost-call list (VL), depending on the number and frequency of identification items (id) entered in the lost-call list (VL).

4. Method according to Claim 1 or 2, **characterized in that**, after a busy agent communications terminal (AKE) becomes free, a connection is set up from the latter to that agent communications terminal (AKE) which is defined by the respective identification item (id), depending on the number and frequency of identification items (id) entered in the lost-call list (VL).

5. Method according to one of Claims 1 or 2, **characterized in that** further agent communications terminals (AKE) are activated depending on the number and frequency of identification items (id) entered in the lost-call list (VL).

6. Method according to one of the preceding claims, **characterized in that** the identification item (id) is represented in digital communications networks (ISDN) by the subscriber number of the calling communications terminal.

7. Method according to one of the preceding claims, **characterized in that** the identification item (id) is represented in analogue communications networks (FE) by a subscriber suffix number.

8. Method according to one of the preceding claims, **characterized in that** the lost-call list (VL) is recorded, including the counts (n) and the associated time durations (zdi), and can be displayed on a screen device (BE),

9. Method according to one of the preceding claims, **characterized in that** the incoming calls (ar) accepted in the call regulator (AO) are signalled, including the identification items (id) in the communications system (KS), with the aid of an ACD control program structure (DGV) by means of event messages (ei) which are transmitted via a defined interface V(ACL) to a connected ACD server (ACD-S), **in that** switching information items (amo) are formed in the ACD server (ACD-S) with the aid of an ACD program structure (ACD) which implements the automatic call distribution, and are transmitted via the defined interface (ACL) to the ACD control program structure (DGV) implemented in the communications system (KS), with the aid of which ACD control program structure (DGV) the incoming calls (ar) are controlled for switching purposes in accordance with the transmitted switching instructions (amo).

## Revendications

1. Procédé destiné au traitement d'appels en arrivée (ar), parvenant à un système de communication (KS) à répartition automatique des appels prévu dans un réseau de communication (KN) et initialisés par des terminaux de communication du réseau de communication (KN), les appels en arrivée (ar) étant, à l'aide d'un classeur d'appels (AG) dans le système de communication (KS), détectés, maintenus et transférés à des terminaux de communication d'agents (AKE), raccordés au système de communication (KS), inclus dans la répartition automatique des appels et libres, **caractérisé par le fait**
- **que**, dans le cas d'appels en arrivée (ar) qui sont rejetés en raison de l'occupation d'un classeur d'appels (AG),
- ou bien une identification (id), transmise avec l'appel en arrivée (ar) et identifiant le terminal de communication appelant est enregistrée et inscrite dans une liste de pertes (VL),
- ou bien, dans la mesure où l'identification (id) respective est déjà inscrite, l'appel en arrivée (ar) est enregistré dans un compteur (Z) affecté à l'identification (id) respective
- et **qu'**un traitement préférentiel est déclenché pour les appels inscrits dans la liste de pertes (VL) en fonction du nombre des identifications comptées.

2. Procédé selon la revendication 1 **caractérisé par le fait que**, dans le cas d'appels en arrivée (ar) rejetés, ayant la même identification (id), on constate en supplément le temps (zdi) qui sépare deux tentatives d'appel et on l'inscrit dans la liste de pertes (VL) avec l'identification (id) respective.

3. Procédé selon la revendication 1 ou 2 **caractérisé par le fait que**, en fonction du nombre et de la fréquence d'identifications (id) inscrites dans la liste de pertes (VL), un nouvel appel (ar) en arrivée est transféré sur un terminal de communication d'agent (AKE) particulier, prévu pour le traitement d'appels (ar) inscrits dans la liste de pertes (VL).

4. Procédé selon la revendication 1 ou 2 **caractérisé par le fait que**, en fonction du nombre et de la fréquence d'identifications (id) inscrites dans la liste de pertes (VL), une fois qu'un terminal de communication d'agent (AKE) occupé devient libre, celui-ci établit une liaison avec le terminal de communication défini par l'identification (id) respective.

5. Procédé selon la revendication 1 ou 2 **caractérisé par le fait que**, en fonction du nombre et de la fréquence d'identifications (id) inscrites dans la liste de pertes (VL), on active des terminaux supplémentaires de communication d'agents (AKE).

6. Procédé selon l'une des revendications précédentes **caractérisé par le fait que** l'identification (id) est représentée, dans des réseaux numériques de communication, par le numéro d'appel du terminal de communication appelant.

7. Procédé selon l'une des revendications précédentes **caractérisé par le fait que** l'identification (id) est représentée, dans des réseaux analogiques de communication (FE), par un numéro d'appel de post-sélection.

8. Procédé selon l'une des revendications précédentes **caractérisé par le fait que** la liste de pertes (VL) est consignée, y compris la position (n) des compteurs et les durées de temps (zdi) correspondantes, et peut être visualisée sur un dispositif à écran (BE).

9. Procédé selon l'une des revendications précédentes **caractérisé par le fait que** les appels en arrivée (ar) enregistrés dans le classeur d'appels (AD) sont communiqués, y compris les identifications (id), par des messages d'événements (ei) transmis dans le système de communication (KS), à l'aide d'une structure de logiciel de commande ACD (DGV), à un serveur ACD , ACD-S, raccordé par l'intermédiaire d'une interface définie (S-ACL), que, dans le serveur ACD, ACD-S, à l'aide d'une structure de logiciel ACD, ACD, réalisant la répartition automatique des appels, des informations (amo), relatives à la commutation, sont formées et transmises, par l'intermédiaire de l'interface définie (ACL), à la structure de logiciel de commande ACD (DGV), réalisée dans le système de communication (KS) et à l'aide de laquelle les appels en arrivée (ar) sont contrôlés en ce qui concerne la commutation, conformément aux instructions (amo) transmises et relatives à la commutation.
